# EUROPEAN PATENT SPECIFICATION

(11) **EP 3 194 701 B1**
(45) Date of publication and mention of the grant of the patent: **04.07.2018**
(21) Application number: 15745732.6
(22) Date of filing: 24.07.2015
(51) Int. Cl.: E06B 9/262, E06B 9/264, F16H 7/08, E06B 9/32, E06B 9/322, F16H 7/12

(54) **BELT TENSIONING DEVICE FOR A HOLLOW BLIND**
GURTSPANNUNGSVORRICHTUNG FÜR EINE HOHLE JALOUSIE
DISPOSITIF DE TENSION DE COURROIE DE STORE CREUX

(30) Priority: 24.07.2014 CN 201420409810 U
(43) Date of publication of application: 26.07.2017
(73) Proprietor: Zhang, Xuezhong, Shanghai 201802 (CN); Intigral, Inc., Walton Hills OH 44146 (US)
(72) Inventor: ZHANG, Xuezhong, Fanglin Road (CN)
(74) Representative: D Young & Co LLP
(86) International application number: PCT/US2015/042039
(87) International publication number: WO 2016/014965

(56) References cited:
- EP-A2- 2 216 485
- WO-A1-2012/092549
- CA-A1- 2 879 353
- CN-U- 203 066 820
- CN-U- 203 066 821
- US-A1- 2013 233 500

## Description

### RELATED APPLICATION DATA

This application claims priority to Chinese National Patent Application No. 201420409810.8 filed July 24, 2014.

### FIELD OF THE INVENTION

The present invention relates to a hollow blind, and more particularly to a belt tensioning device for a hollow blind.

### BACKGROUND OF THE INVENTION

There is a growing international popularity for hollow blinds, due to their good thermal insulation, light transmittance and sun-shading properties. A so-called hollow blind mainly consists of a set of sun-shading sheets and a belt driven system which are sealed in hollow glasses. The driven system mainly includes both an upper belt gear and a lower belt gear. A belt is connected end to end by a drive handle and surrounds the two belt gears, wherein the upper belt gear is connected to a rope roller for the sun-shading sheets to control the sun-shading sheets to move up or down; and the belt must be in a tension state, so that the driving handle and the upper belt gear can make synchronized motions. This is usually achieved through precise adjustment of the length of the belt or precise adjustment of the distance between the upper and lower belt gears, which is a difficult problem for the hollow blind for the following reasons: a side frame is of a kind of profile with a rectangular cross-section, and a belt tensioning device along with the belt driven system are disposed in the interior of the profile, thus it is very difficult to adjust the tension of the belt. If the tension is too small, the belt will be easy to skip teeth, causing failure; and if the tension is too large, the resulting friction will be too large, making it difficult to move the blind up or down.

US 2013/233500 A1 describes a positioning apparatus of a window shade, installed on an upper beam or a lower beam of said window shade and functioned with a pulling string of said window shade to generate a positioning effect or being pulled thereof and with said pulling string in a tensioned state, said positioning apparatus of said window shade comprising: a supporting stand, having a body part and at least one installation part extended on one side of said body part; and at least one circular ring, attached to said body part, and said puling string at least partially surrounding a circumference of said at least one circular ring to form a winding thereon.

EP 2 216 485 A2 describes a device having a deflection part held at a base part, and a deflection region for receiving an end section of a cord. The deflection region is extended above 180 degree, and the end section is deflected in a longitudinal direction. A cord end support detachably holds a free cord end of the end section that is deflected around 180 degree. The deflection part is displaced relative to the base part, and/or the cord end support holds the cord end at different positions relative to the base part. The positions are arranged along the direction.

CA 2 879 353 A1 describes a hollow glass built-in sun-shading apparatus, the apparatus comprising a rope winding mechanism, a transmission mechanism for controlling the rotation of the rope winding mechanism, and a sun-shading mechanism connected to the rope winding mechanism, wherein the rope winding mechanism comprises a rope winding shaft; a set of rope winding propellers are arranged on the rope winding shaft; the transmission mechanism is connected to the rope winding shaft; and the sun-shading mechanism is connected to the rope winding propellers.

WO 2012/092549 A1 describes an operating control system for a retractable shade including a roller reversibly rotatable within a headrail including a clamp system for gripping an endless operating cord in a neutral position to prevent rotation of the roller and a tensioner if properly mounted in a fixed position will release the clamp system to permit rotation of the roller while positioning the runs of the endless cord in a closely spaced relationship to minimize the risk of an infant or child becoming entangled in the cord.

CN 203 066 821 U describes a hollow glass shutter door and window. A side frame is arranged in a sandwich layer of a front layer of glass and a back layer of glass, the middle part of a sealed space formed by the side frame, a framework inserting element and the glass is provided with a support rod, a long shaft is arranged on two support frames which are arranged on the support rod, two rotating wheels and one main wheel are arranged on the long shaft, a fixing element is fixedly arranged on the middle part of the right side of the side frame, the lower end of the fixing element is provided with a movable slide block, the front surface of the movable slide block is provided with a first movable pulley, two bearing groups, a first magnet, a second magnet and a third magnet, each of the two rotating wheels is provided with a first pulling rope fixedly and respectively, the lower ends of the first pulling ropes are provided with a bottom plate, blades are fixedly arranged between the bottom plate and the support rod, one end of a second pulling rope is connected to the bottom plate, the other end of the second pulling rope is fixedly arranged on the fixing element, the upper end of the back surface of the movable slide block is provided with a threading pipe, a fourth magnet is arranged on the middle part of the back surface of the movable slide block, the lower end of the movable slide block is provided with a threading hole, the lower end of the right side of the side frame is fixedly provided with a steering tensioning wheel, and a third pulling rope passes through the threading pipe and the threading hole to be connected with the main wheel and the steering tensioning wheel.

CN 203 066 820 U describes a shutter door and window. A side frame is arranged in a sandwich layer of a front layer of glass and a back layer of glass, the upper part of a sealed space formed by the side frame, a framework inserting element and the glass is provided with a support rod, two support frames are fixedly arranged on the support rod, a long shaft is arranged on the two support frames, two rotating wheels and one main wheel are arranged on the long shaft, a reset block is arranged at the lower end of the main wheel, the lower end of the reset block is fixedly provided with a T-shaped iron frame, a steering tensioning wheel and a fixing element are sheathed on the T-shaped iron frame, the lower end of the fixing element is provided with a movable slide block, the upper end and the lower end of the movable slide block are respectively provided with a first magnet and a weight balancing block, a movable pulley, two groups of bearing groups, a second magnet, a third magnet and a fourth magnet are arranged on the movable slide block, a first pulling rope is respectively fixed on the two rotating wheels, the lower end of the first pulling rope is provided with a bottom plate, a blade is fixedly arranged between the bottom plate and the support rod, first guide wheels are respectively arranged on the two support frames, the right side of the support rod is provided with a second guide wheel, one end of the second pulling rope passes through a middle hole of the blade to be connected onto the bottom plate, and the other end of the second pulling rope is fixedly arranged on the fixing element.

### SUMMARY OF THE INVENTION

The present invention is designed to overcome the deficiencies of the prior art and to provide a belt tensioning device for a hollow blind. The present invention allows the belt tensioning device to move along only a single direction within the side frame of the hollow blind, so that the distance between two belt gears can be gradually adjusted, thereby maintaining a proper tensioning force in the belt.

To solve the above problem, there is provided a belt tensioning device for a hollow blind, comprising a holder seat equipped with a lower belt gear on the top portion of the holder, the holder seat is in clearance fit with a lumen of a side frame of the hollow blind and is provided with a group of V-shaped slots from top to bottom therein, each V-shaped slot is equipped with a clip therein, the slip has a width slightly larger than the width of the lumen of the side frame of the hollow blind when being bent.

In the belt tensioning device for a hollow blind, a vertical pressing block is disposed on the central portion of each V-shaped slot.

In the belt tensioning device for a hollow blind, a notch is formed at the center of one side of the clip.

According to the present invention, the clip is additionally provided in the holder seat, the clip is recessed downward at its central portions to form V-shape by using the slot, and meanwhile, the clip has a width slightly larger than the width of the cavity in the side frame when being recessed downward, so that the clip is held against two walls of the cavity in the window frame, thus preventing the belt tensioning device from sliding upward easily. On the contrary, because the clip is recessed downward, two ends of the clip are bent to its center when the fixing device moves downward, so that the friction generated between the clip and the inner walls of the side frame is very small, thus allowing the fixing device to move downward smoothly.

When the belt tensioning device moves downward to a proper position, the belt can be maintained in a tension state. At that time, the two ends of the clip press tightly against the two walls of the lumen of the side frame, so that the clip is stuck on the inner walls of the side frame of the hollow blind, preventing the belt tensioning device from moving upward and ensuring the belt being in a tension state.

### BRIEF DESCRIPTION OF THE DRAWINGS

The present invention is further explained in conjunction with the accompanying drawings:
Figure 1 is a schematic view of a device according to the present invention;
Figure 2 is a side view of Figure 1;
Figure 3 is a schematic view of the preferred embodiment according to the present invention; and
Figure 4 is a schematic view of a clip.

### DETAILED DESCRIPTION

The present invention relates to a hollow blind with a belt tensioning device for the hollow blind. A belt tensioning device for a hollow blind comprises: a holder seat equipped with a lower belt gear on the top portion of the holder, the holder seat is in clearance fit with a lumen of a side frame of the hollow blind and is provided with a group of V-shaped slots from top to bottom therein, each V-shaped slot is equipped with a clip therein, the slip has a width slightly larger than the width of the lumen of the side frame of the hollow blind when being bent. The present invention allows the belt tensioning device to move along a single direction within the side frame of the hollow blind, so that the distance between two belt gears can be gradually adjusted, thereby maintaining a proper tensioning force in the belt.

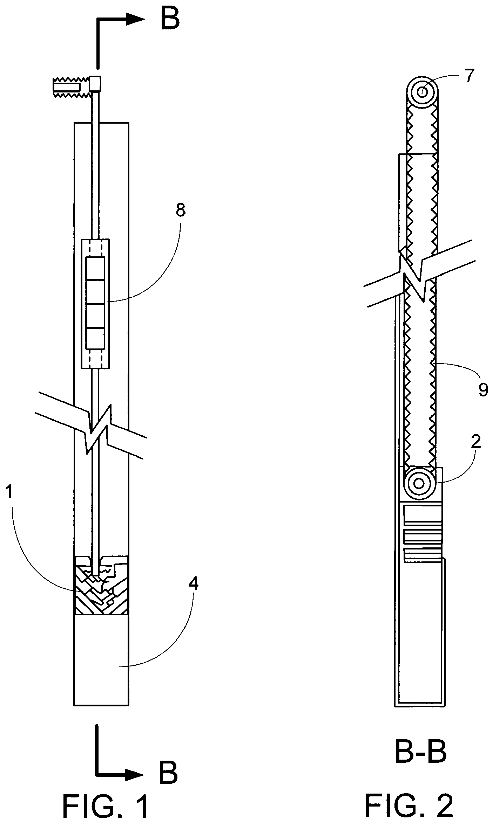

As shown in FIG. 1 and FIG. 2, 7 is an upper belt gear, 8 is a handle, and 9 is a belt. The present invention is a belt tensioning device for sun-shading sheets of a hollow blind, which includes a holder seat 1. The holder seat is equipped with a lower belt gear 2 on its top portion. The holder seat 1 is in clearance fit with a lumen of a side frame 4 of the hollow blind and is provided with a group of V-shaped slots 3 from top to bottom therein. Each V-shaped slot is equipped with a clip 6 therein. When being bent downward at its central portion, the slip has a width slightly larger than the width of the lumen of the side frame of the hollow blind, so that the clip is stuck on the inner walls of the side frame, thus preventing it from moving upward and ensuring the belt being in a tension state.

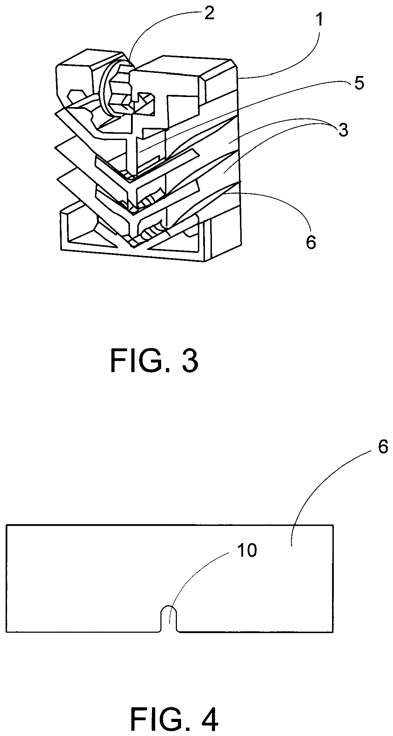

Referring to FIG. 3, in a preferred embodiment of the present invention, there are provided with three V-shaped slots 3. A vertical pressing block 5 is disposed on the central portion of each clip and presses the central portion of the clip 6, so that the clip 6 is recessed downward to form a V-shape and make sure it will not return to the flat and straight state due to elastic force.

In the fixing device for the sun-shading sheets of the hollow blind, a notch 10 is formed at the center of one side of the clip 6 (see FIG. 4).

Although the invention has been described in detail with particular reference to certain embodiments detailed herein, other embodiments can achieve the same results. Variations and modifications of the present invention will be obvious to those skilled in the art and the present invention is intended to cover in the appended claims all such modifications and equivalents.

## Claims

1. A belt tensioning device for a hollow blind comprising:
a holder seat (1) equipped with a lower belt gear (2) on the top portion of the holder, wherein the holder seat (1) is in clearance fit with a lumen of a side frame (4) of the hollow blind and is **characterized by** a group of V-shaped slots (3) from top to bottom therein, each V-shaped slot (3) is equipped with a clip (6) therein, the clip (6) has a width slightly larger than the width of the lumen of the side frame (4) of the hollow blind when being bent.

2. The belt tensioning device for a hollow blind according to claim 1, wherein a vertical pressing block (5) is disposed on the central portion of each V-shaped slot (3).

3. The belt tensioning device for a hollow blind according to claim 1, wherein a notch (10) is formed at the center of one side of the clip (6).

## Patentansprüche

1. Riemenspannvorrichtung für eine hohle Jalousie, die Folgendes umfasst:
einen Halterungssitz (1), der mit einem unteren Riemenzahnrad (2) an dem oberen Abschnitt der Halterung ausgestattet ist, wobei sich der Halterungssitz (1) mit einem Hohlraum eines Seitenrahmens (4) der hohlen Jalousie in Spielpassung befindet und durch eine Gruppe darin befindlicher V-förmiger Schlitze (3) von oben nach unten gekennzeichnet ist, wobei jeder V-förmige Schlitz (3) mit einer Klemme (6) darin ausgestattet ist, wobei die Klemme (6) gebogen eine etwas größere Breite als die Breite des Hohlraums des Seitenrahmens (4) der hohlen Jalousie aufweist.

2. Riemenspannvorrichtung für eine hohle Jalousie nach Anspruch 1, wobei ein vertikaler Druckblock (5) an dem mittigen Abschnitt jedes V-förmigen Schlitzes (3) angeordnet ist.

3. Riemenspannvorrichtung für eine hohle Jalousie nach Anspruch 1, wobei eine Kerbe (10) in der Mitte einer Seite der Klemme (6) ausgebildet ist.

## Revendications

1. Dispositif de tensionnement de courroie pour un store creux, comprenant :
un siège de support (1) équipé d'un engrenage de courroie inférieur (2) sur la partie supérieure du support, le siège de support (1) étant ajusté avec jeu à une lumière d'un cadre latéral (4) du store creux et étant **caractérisé par** un groupe de fentes en forme de V (3) de haut en bas dans celui-ci, chaque fente en forme de V (3) étant munie d'une pince (6) dans celle-ci, la pince (6) ayant une largeur légèrement plus large que la largeur de la lumière du cadre latéral (4) du store creux lorsqu'elle est courbée.

2. Dispositif de tensionnement de courroie pour un store creux selon la revendication 1, dans lequel un bloc de pressage vertical (5) est disposé sur la portion centrale de chaque fente en forme de V (3) .

3. Dispositif de tensionnement de courroie pour un store creux selon la revendication 1, dans lequel une encoche (10) est formée au niveau du centre d'un côté de la pince (6).
